# EUROPEAN PATENT SPECIFICATION

(11) **EP 4 447 593 B1**
(45) Date of publication and mention of the grant of the patent: **11.03.2026**
(21) Application number: 23737082.0
(22) Date of filing: 05.01.2023
(51) Int. Cl.: H04W 72/12, H04L 1/1867, H04L 1/1825, H04L 1/1829

(54) **COMMUNICATION METHOD, APPARATUS, AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 10.01.2022 CN 202210023403
(43) Date of publication of application: 16.10.2024
(73) Proprietor: Huawei Technologies Co., Ltd., Shenzhen, Guangdong 518129 (CN)
(72) Inventor: XU, Bin, Shenzhen, Guangdong 518129 (CN)
(74) Representative: MERH-IP Matias Erny Reichl Hoffmann Patentanwälte PartG mbB
(86) International application number: PCT/CN2023/070620
(87) International publication number: WO 2023/131220

(56) References cited:
- WO-A1-2021/056354
- WO-A2-2020/223453
- CN-A- 111 181 693
- INTERDIGITAL (SUMMARY RAPPORTEUR): "[101][NTN] Summary on remaining aspects of timers, HARQ, and LCP including CG/SPS aspects in AI 8.10.2.2", vol. RAN WG2, no. eMeeting; 20211101 - 20211112, 1 November 2021 (2021-11-01), XP052073269, Retrieved from the Internet <URL:https://ftp.3gpp.org/tsg_ran/WG2_RL2/TSGR2_116-e/Inbox/R2-2111331.zip R2-2111331 [101][NTN] Summary of other MAC issues (InterDigital).docx> [retrieved on 20211101]
- NOKIA, NOKIA SHANGHAI BELL: "Discussion on LCP procedure for NTN", 3GPP TSG-RAN WG2 MEETING #106, R2-1911286, 16 August 2019 (2019-08-16), XP051769043

## Description

This application claims priority to Chinese Patent Application No. 202210023403.2, filed with the China National Intellectual Property Administration on January 10, 2022 and entitled "COMMUNICATION METHOD, APPARATUS, AND SYSTEM".

### TECHNICAL FIELD

Embodiments of this application relate to the communication field, and in particular, to a communication method, apparatus, and system.

### BACKGROUND

In a random access process, a random access response message (also referred to as a message 2, Msg 2) sent by an access network device may carry an uplink grant (uplink grant), and the uplink grant is used by a terminal device to send uplink data. Currently, it is specified that a hybrid automatic repeat request (hybrid automatic retransmission request, HARQ) process 0 is fixedly used on the uplink grant for uplink data transmission. However, currently, not all data can be transmitted in the HARQ process 0. For example, when a HARQ state allowed to be used for sending data on a logical channel is different from a HARQ state of the HARQ process 0, the terminal device cannot send the data on the logical channel on the uplink grant. Consequently, communication interruption may exist between a network device and the terminal device, affecting communication efficiency and reliability. Therefore, how to improve the communication reliability is an urgent technical problem to be resolved.
Document "[101][TNT] Summary on Remaining Aspects of Timers, HARQ, and LCP Including CG/SPS Aspects in AI 8.10.2.2," 3GPP DRAFT; R2-2111331, 3rd Generation Partnership Project (3GPP), Mobile Competence Centre, 650 Route des Lucioles, F-06921 Sophia-Antipolis Cedex, France, vol. RAN WG2, no. eMeeting; 1 November 2021, discusses a HARQ configuration method in which, when the HARQ state configured by a HARQ process differs from the HARQ state defined by the legacy Logical Channel (LCH) configuration, it is proposed to ignore the HARQ state set by the HARQ process and instead applies the HARQ state as specified by the legacy LCH configuration.

### SUMMARY

Embodiments of this application provide a communication method, apparatus, and system, to improve communication reliability. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

### BRIEF DESCRIPTION OF DRAWINGS

FIG. 1 is a diagram of a communication system according to an embodiment of this application.
FIG. 2 is a diagram of a communication method according to an embodiment of this application;
FIG. 3 is a diagram of another communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

Technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system.

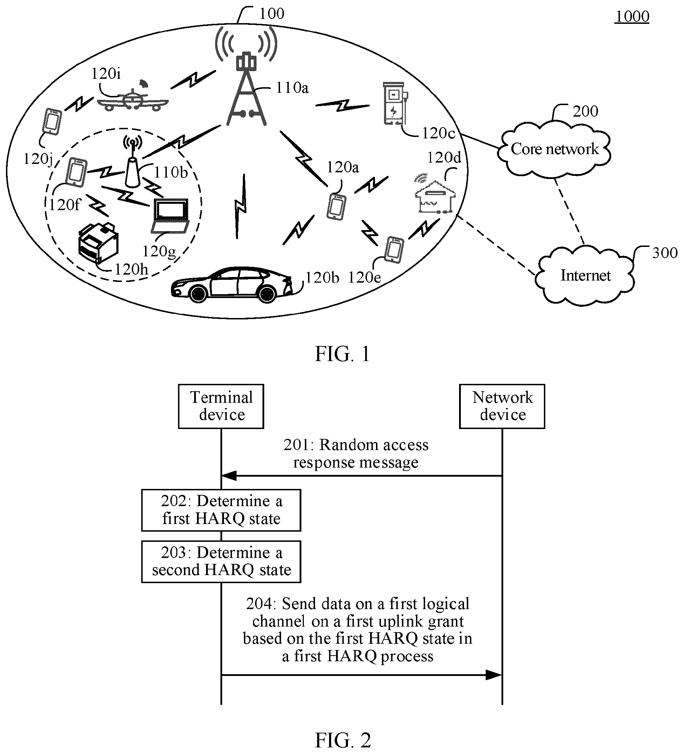

A diagram of an architecture of a mobile communication system applied to embodiments of this application is provided. FIG. 1 is a diagram of an architecture of a communication system 1000 to which an embodiment of this application is applied. As shown in FIG. 1, the communication system includes a radio access network 100. Optionally, the communication system 1000 may further include a core network 200 and an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of a core network device and logical functions of the radio access network device are integrated into a same physical device, or some functions of a core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device. This is not shown in FIG. 1.

It should be understood that an information transmit end in the communication system in this application may be a network device or a terminal device, and an information receive end may be a network device or a terminal device. This is not limited in this application.

A UE in embodiments of this application may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, some examples of the terminal may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a wearable device, a terminal device in a 5G network, or a terminal device in a future evolved public land mobile communication network (public land mobile network, PLMN). This is not limited in embodiments of this application.

By way of example rather than limitation, in embodiments of this application, the terminal device may alternatively be a wearable device. The wearable device may also be referred to as a wearable intelligent device, and is a general term of wearable devices, such as glasses, gloves, a watch, clothes, and shoes, that are intelligently designed and developed for daily wear by using a wearable technology. The wearable device is a portable device that is directly worn on a body or integrated into clothes or an accessory of a user. The wearable device is more than a hardware device, and implements a powerful function through software support, data interaction, and cloud interaction. In a broad sense, wearable intelligent devices include a full-function and large-size device that can implement complete or partial functions without depending on a smartphone, such as a smart watch or smart glasses, and a device that focus on only one type of application function and needs to work with another device such as a smartphone, such as various smart bands or smart jewelry for monitoring physical signs. In addition, the terminal device in embodiments of this application may alternatively be a terminal device in an IoT system. IoT is an important part of future development of information technologies. A main technical feature of the IoT is to connect things to a network by using a communication technology, to implement an intelligent network for human-machine interconnection and thing-thing interconnection.

It should be understood that the network device in the wireless communication system may be a device that can communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved base station (evolved NodeB, eNB), a next generation base station (next generation NodeB, gNB), a relay station, an access point, a transmitting and receiving point (transmitting and receiving point, TRP), a transmitting point (transmitting point, TP), a master station (master eNodeB, MeNB), a secondary station (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that takes on a base station function in D2D, V2X, and M2M communication, a network side device in a 6G network, a device that takes on a base station function in a future communication system, or the like. The base station may support networks of a same access technology or different access technologies. A specific technology and a specific device form that are used by the network device are not limited in embodiments of this application.

In embodiments of this application, a function of the base station may alternatively be performed by a module (for example, a chip) in the base station, or may be performed by a control subsystem including the base station function. The control subsystem that includes the base station function herein may be a control center in the foregoing application scenario, such as the smart grid, the industrial control, the smart transportation, and the smart city. A function of the terminal may alternatively be performed by a module (for example, a chip or a modem) in the terminal, or may be performed by an apparatus including the function of the terminal.

For ease of understanding this application, a random access process and related concepts are briefly described in advance.
1. The random access process is as follows:
   A terminal device sends, based on a scheduled system information block 1 (system information block, SIB 1) over a random access channel occasion (RACH occasion, RO) resource associated with a synchronization signal and physical broadcast channel (synchronization signal and PBCH, SSB), a physical random access channel (physical random access channel, PRACH, namely, a Msg 1) carrying a random access sequence.

If a base station successfully receives the random access sequence and allows access of the UE, the base station sends a random access response (random access response, RAR), namely, a Msg 2, to the UE in a configured RAR window (window).

In addition, the UE monitors, in the configured RAR window, downlink control information (downlink control information, DCI) transmitted on a physical downlink control channel (physical downlink control channel, PDCCH), where the DCI indicates the UE to obtain RAR information from a media access control (media access control, MAC) protocol data unit (protocol data unit, PDU) carried on a physical downlink shared channel (physical downlink shared channel, PDSCH).

After successfully detecting the DCI, the terminal receives the random access response RAR (namely, the Msg 2), and sends a physical uplink shared channel (physical uplink shared channel, PUSCH) based on a time-frequency resource indicated by an uplink grant UL grant in the random access response, where the channel is used to carry a Msg 3. Then, a network device sends DCI to the terminal device, where the DCI indicates a time-frequency resource carrying a contention resolution message, namely, a Msg 4. The terminal device detects the DCI, and receives the Msg 4.

### 2. Non-terrestrial network (non-terrestrial network, NTN) communication:

In 5G, technical research of an NTN is carried out, and a high-altitude platform, a satellite, or the like is introduced into a wireless communication system. The high-altitude platform or the satellite may be used as a relay node to assist communication between the UE and an access network device located on the ground, or may be used as a carrier to carry an access network device in the air to communicate with the UE. In the NTN network, because the high-altitude platform or the satellite device participates in a communication process, when data is sent between the UE and the base station, the data needs to be transmitted to the satellite. In this case, because a propagation distance is extremely long, round-trip time (round-trip time, RTT) of data transmission reaches tens of milliseconds to hundreds of milliseconds. However, RTT of a conventional terrestrial communication network is only several milliseconds or shorter.

### 3. Hybrid automatic repeat request (hybrid automatic retransmission request, HARQ) mechanism:

A HARQ is a method for ensuring data transmission reliability. After receiving data, a receive end detects whether there is an error in a received data packet. If the received data packet is correct, the receive end sends a positive acknowledgment (ACK) to a transmit end. After receiving the ACK, the transmit end then sends a next data packet. If the received data packet is incorrect, the receive end discards the data packet, and sends a negative acknowledgment (NACK) to the transmit end. After receiving the NACK, the transmit end resends the same data. Although these data packets cannot be correctly decoded, useful information is still included in the data packets. If the data packets are discarded, the useful information is lost. A HARQ with soft combining (HARQ with soft combining) is used, so that the received incorrect data packet is stored in a HARQ buffer (buffer), and is combined with a retransmitted data packet that is subsequently received, to obtain a data packet that is more reliable than a data packet that is separately decoded (where this is known as a "soft combining" process). Then, the combined data packet is decoded. If decoding still fails, a process of "requesting retransmission and then performing soft combining" is repeated.

### 4. HARQ delay:

A delay in a data transmission process greatly affects a conventional HARQ mechanism. The NTN is used as an example. Data transmission in the NTN has a large delay, and the HARQ delay is caused. Specifically, currently, after each data packet is sent, the data packet is buffered in a HARQ buffer and occupies one HARQ process. After feedback of the data packet is returned, if a positive acknowledgment is received, the data packet is deleted, and an index is released and allocated to another data packet; or if a negative acknowledgment is received, the data packet in the buffer is retransmitted. Currently, one HARQ entity has a maximum of 16 HARQ processes. However, because a transmission delay of the data packet and a transmission delay of a feedback packet are both large, data in the HARQ buffer cannot be deleted in a timely manner. This leads to an extremely high requirement on a size of the buffer. In addition, the HARQ process is occupied by a data packet for a long time. In this case, a limited process is quickly fully occupied. As a result, other data cannot be transmitted in the HARQ process, and a data transmission rate is affected. This is referred to as a HARQ delay problem.

The HARQ entity may be a logical entity or a physical entity. One UE or one base station may include a plurality of HARQ entities, each HARQ entity corresponds to one cell or carrier, and there is a limit on a maximum quantity of processes for each HARQ entity. The HARQ entity is responsible for performing a HARQ function and a HARQ operation, for example, process maintenance, buffer allocation, or HARQ combination.

To resolve the HARQ delay problem caused by the delay in the data transmission process, a HARQ function disabling feature is introduced. Specifically, the network device may configure retransmission enabled or retransmission disabled for an uplink HARQ, where the retransmission enabled and the retransmission disabled are respectively referred to as a HARQ state A and a HARQ state B; or may configure HARQ feedback enabled or HARQ feedback disabled for a downlink HARQ. If retransmission or feedback of a HARQ process is disabled, the UE does not need to perform corresponding retransmission or feedback for the process.

A transmission manner in which the HARQ function is enabled is suitable for a service having a high reliability requirement, and a transmission manner in which the HARQ function is disabled is suitable for a service having a high transmission delay requirement. Therefore, for uplink transmission, the network device may configure an allowed HARQ state for each logical channel of the UE based on a requirement of data on the logical channel, to ensure that the data on the logical channel can be transmitted in a corresponding transmission manner. In other words, data on some logical channels is transmitted based on the HARQ state A, and data on some logical channels is transmitted based on the HARQ state B. The network device may configure a correspondence between each HARQ process and a HARQ state, and configure a correspondence between each logical channel and a HARQ state. When performing dynamic scheduling, the network device may include an identifier of a HARQ process in DCI, and the terminal device may determine, based on the index and the foregoing correspondence, that data on which logical channels can be transmitted on a corresponding uplink resource in the HARQ process.

In the random access process, the random access response sent by the network device carries the uplink grant, and the uplink grant is used by the terminal device to send uplink data. Currently, it is specified that data carried on the uplink grant is fixedly transmitted in an uplink manner in a HARQ process 0. When the allowed HARQ state configured for the logical channel does not match a HARQ state configured for the HARQ process 0, the uplink grant cannot be used for the data on the logical channel. Consequently, the data cannot be transmitted, and normal communication is affected.

For the foregoing problem, an embodiment of this application proposes an information transmission method. As shown in FIG. 2, the method may include the following steps.

Step 201: A network device sends a random access response message to a terminal device. Correspondingly, the terminal device receives the random access response message.

The random access response message may indicate an uplink grant. The uplink grant (UL grant) is also referred to as an uplink grant resource. The uplink grant may be configured by the network device for the terminal device, may be carried in the random access response message, and is sent by the network device to the terminal device. The uplink grant may be used by the terminal device to send data to the network device.

Step 202: The terminal device determines a first HARQ state.

The first HARQ state is a HARQ state of a first HARQ process, and the first HARQ process is a HARQ process used to send data on a first uplink grant.

The first HARQ process may be a HARQ process 0. 0 is an index of the HARQ process. It should be understood that the HARQ process 0 is merely an example of the first HARQ process. One HARQ entity may include a maximum of 16, 32, or more HARQ processes. In these HARQ processes, another HARQ process that can be used to send the data on the first uplink grant may also be used as the first HARQ process.

The first HARQ state is the HARQ state of the first HARQ process. The first HARQ state may be configured by the network device. For example, the network device may configure a corresponding HARQ state for each HARQ process included in the HARQ entity. HARQ states that may be configured for one HARQ process include a HARQ function enabled state and a HARQ function disabled state. It should be understood that the network device may alternatively configure corresponding HARQ states for some HARQ processes included in the HARQ entity. This is not limited in this application.

Optionally, the terminal device determines the first HARQ state based on first indication information. For example, the network device sends the first indication information to the terminal device, where the first indication information indicates the first HARQ state. Specifically, the first indication information indicates a HARQ state corresponding to the first HARQ process. For example, the first indication information includes a process identifier and HARQ state information, and the process identifier is used to identify the HARQ process. For another example, the first indication information includes only a HARQ state. The terminal device and the network device may agree, in advance, that when the first indication information does not include a process identifier, the first indication information indicates, by default, a HARQ state corresponding to the HARQ process 0. It should be understood that the first indication information may indicate a HARQ state of a HARQ process, or the first indication information may indicate HARQ states of a plurality of HARQ processes. This is not limited in this application. The first indication information may be carried in RRC signaling.

The network device configures a corresponding HARQ state for to-be-sent data of the terminal device, so that a data transmission requirement can be met, and communication quality can be improved.

Step 203: The terminal device determines a second HARQ state.

The second HARQ state is a HARQ state that is of a HARQ process and that is allowed to be used when data on a first logical channel is sent. Specifically, when the terminal device needs to send the data on the first logical channel, the terminal device determines the HARQ state that is of the HARQ process and that is allowed to be used when the data on the first logical channel is sent, to send the data on the first logical channel based on the allowed HARQ state.

The network device may configure, for a logical channel, a HARQ state allowed to be used. For example, the network device may configure a HARQ state for each of all logical channels, or the network device may configure HARQ states for some logical channels. A HARQ state that is allowed to be used and that can be configured for one logical channel includes a HARQ function enabled state or a HARQ function disabled state. The first logical channel is one of the foregoing logical channels.

It may be understood that the HARQ state that is allowed to be used and that is configured for the logical channel is a HARQ state that is of a HARQ process and that is allowed to be used for sending data on the logical channel, and the HARQ state allowed to be used is related to a service type or quality of service (quality of service, QoS) of a service corresponding to the data on the logical channel. For example, for data of a service type having a strict delay requirement, the HARQ state allowed to be used may be configured as the HARQ function disabled state. For another example, for data of a service type having a strict reliability requirement, the HARQ state allowed to be used may be configured as the HARQ function enabled state.

Optionally, the terminal device determines the second HARQ state based on second indication information. For example, the network device sends the second indication information to the terminal device, where the second indication information indicates the second HARQ state. The second indication information may be carried in RRC signaling, a media access control control element (media access control control element, MAC CE), or DCI. The second indication information may indicate a HARQ state of at least one logical channel. Specifically, the second indication information indicates a HARQ state corresponding to the first logical channel. For example, the second indication information includes a channel identifier and HARQ state information, and the channel identifier is used to identify the logical channel.

The second indication information may also indicate a first condition. For example, the first condition may be that the HARQ state allowed to be used when the data on the first logical channel is sent is the second HARQ state. In other words, the terminal device may determine, based on the first condition, the HARQ state used when the data on the first logical channel is sent. Alternatively, the first condition may be an identifier of a HARQ process allowed to be used when the data on the first logical channel is sent. Alternatively, the first condition may be a HARQ state of a HARQ process allowed to be used for sending uplink data on an uplink grant in a message 2. Alternatively, the first condition may be a HARQ process allowed to be used for sending uplink data on an uplink grant in a message 2.

The second indication information may indicate a HARQ state, or may indicate a condition that needs to be met for data transmission. This improves flexibility of determining the second HARQ state by the terminal device.

Step 204: When the first HARQ state is different from the second HARQ state, the terminal device sends the data on the first logical channel to the network device on the first uplink grant based on the first HARQ state in the first HARQ process. Correspondingly, the network device receives the data.

In other words, when the first HARQ state is different from the second HARQ state, the terminal device may ignore a HARQ state configured by the network device for the first logical channel, and send the data to the network device based on the HARQ state configured for the first HARQ process.

That the first HARQ state is different from the second HARQ state may be that the first HARQ state is the HARQ function disabled state, and the second HARQ state is the HARQ function enabled state; or may be that the first HARQ state is the HARQ function enabled state, and the second HARQ state is the HARQ function disabled state. This is not limited in this application.

The first uplink grant may indicate a time-frequency resource and/or a modulation and coding scheme (modulation and code rate, MCS), and the data on the first logical channel is sent on the first uplink grant, in other words, the data on the first logical channel is sent in the time-frequency resource indicated by the first uplink grant, or the data on the first logical channel is sent by using the MCS indicated by the first uplink grant. Alternatively, when the first uplink grant indicates a time-frequency resource and an MCS, the data on the first logical channel is sent, by using the MCS indicated by the first uplink grant, in the time-frequency resource indicated by the first uplink grant.

In addition, when the first HARQ state is different from the second HARQ state, the terminal device further needs to determine that a radio bearer corresponding to the first logical channel is a first radio bearer, where data on a logical channel corresponding to the first radio bearer is sent in the first HARQ process. In other words, only when there is a correspondence between a radio bearer and a HARQ process, can data on a logical channel corresponding to the radio bearer be sent in the HARQ process. For example, if the first radio bearer corresponds to the first HARQ process, the data on the logical channel corresponding to the first radio bearer may be sent in the first HARQ process. Alternatively, only when a second condition is met, can data be sent in a HARQ process, and the second condition is that a radio bearer corresponding to a logical channel corresponds to the HARQ process. For example, only when the first logical channel corresponds to the first radio bearer, and the first radio bearer corresponds to the first HARQ process, can the data on the first logical channel be sent in the first HARQ process. The second condition may be preconfigured. Specifically, when the network device preconfigures that the radio bearer is an SRB 1, the data may be sent in the first HARQ process. If the SRB 1 corresponds to a logical channel 1, data on the logical channel 1 may be sent in the first HARQ process. Alternatively, the first radio bearer has a first capability, and the first capability is that the data on the logical channel corresponding to the first radio bearer is sent in the first HARQ process.

Further, the terminal device may determine, based on the correspondence between a radio bearer and a HARQ process or based on a correspondence between a radio bearer type and a HARQ process, whether the data on the logical channel corresponding to the first radio bearer is sent in the first HARQ process. The following describes two implementations in detail.

In a possible implementation, the first HARQ process may correspond to at least one radio bearer. Specifically, the network device preconfigures that data on logical channels corresponding to a plurality of radio bearers may be sent in the first HARQ process. For example, the network device preconfigures that data on logical channels corresponding to radio bearers SRB 0, SRB 1, and SRB 2 may be sent in the first HARQ process. For example, if the SRB 0 corresponds to a logical channel 0 and the logical channel 1, the SRB 1 corresponds to a logical channel 2, and the SRB 2 corresponds to a logical channel 3, a logical channel 4, and a logical channel 5, all data on the logical channels 0 to 5 may be sent in the first HARQ process. The network device may send an identifier of a radio bearer to the terminal device, for example, a radio bearer ID. The terminal device determines that the radio bearer is the SRB 1. In a range of radio bearers that are configured by the network device and on which data can be sent in the first HARQ process, the terminal device may determine that the data on the first logical channel may be sent in the first HARQ process. It should be understood that a correspondence between a radio bearer and a logical channel, the identifier of the radio bearer, and an identifier of the logical channel in this application are merely examples and not limitations. It should be further understood that, when the first HARQ state is different from the second HARQ state, the data on the logical channel may be sent in the HARQ process. It indicates that the HARQ state configured by the network device for the data on the logical channel may be canceled, and the data is sent based on the HARQ state configured for the HARQ process. For other similar descriptions in this specification, refer to explanations herein. Details are not described below again.

In another possible implementation, the first HARQ process may correspond to at least one radio bearer type. When the first HARQ state is different from the second HARQ state, the terminal device further needs to determine that the radio bearer corresponding to the first logical channel belongs to a first radio bearer type. The first radio bearer type includes at least one radio bearer, and data on a logical channel corresponding to any radio bearer in the first radio bearer type is sent in the first HARQ process. For example, the first radio bearer type may be a signaling radio bearer. The network device may preconfigure that data on a logical channel corresponding to the signaling radio bearer may be sent in the first HARQ process. Alternatively, the network device may preconfigure a correspondence between a radio bearer and a radio bearer type. For example, radio bearers SRB 0, SRB 1, and SRB 2 are signaling radio bearers. The network device sends, to the terminal device, an identifier of the radio bearer corresponding to the first logical channel, for example, a radio bearer ID. If the terminal device determines that the radio bearer corresponding to the first logical channel is the signaling radio bearer, the terminal device may determine that the data on the first logical channel may be sent in the first HARQ process. For a correspondence between a radio bearer type and a HARQ process, refer to related descriptions of the correspondence between a radio bearer and a HARQ process in step 204. Details are not described again.

The radio bearer or the radio bearer type may be indicated based on radio bearer configuration. For example, the network device sends radio bearer configuration to the terminal device. The radio bearer configuration may include an association relationship between a radio bearer and a logical channel, or an association relationship between a radio bearer type and a logical channel. The terminal device may determine, based on the association relationship, the radio bearer or the radio bearer type corresponding to the logical channel. Specifically, the first radio bearer is used as an example. The network device sends the radio bearer configuration to the terminal device. The radio bearer configuration includes an association relationship between the first radio bearer and the first logical channel. In other words, the first radio bearer corresponds to the first logical channel. The terminal device may determine the association relationship based on the radio bearer configuration.

In the two possible implementations, the correspondence between a radio bearer or a radio bearer type of a logical channel and a HARQ process can be used to determine that data may be sent on the logical channel in the first HARQ process, to avoid a case in which the data cannot be transmitted when the radio bearer or the radio bearer type of the logical channel does not correspond to the HARQ process. This improves communication efficiency. The radio bearer type may include a plurality of radio bearers. This can further reduce overheads.

The foregoing method is applicable to any event (scenario) that triggers a random access process, for example, RRC connection reestablishment, RRC connection recovery, time synchronization establishment in a secondary timing advance cell group, a system message request, that an uplink synchronization state is out-of-synchronization, that no SR resource is configured for the logical channel, an SR failure, beam failure recovery, and a continuous uplink "listen before talk" mechanism failure. In other words, the method in step 204 may be used as a default rule and is applicable to any event that triggers the random access process. When the first HARQ state is different from the second HARQ state, the terminal device sends the data on the first logical channel to the network device on the first uplink grant based on the first HARQ state in the first HARQ process by default.

Further, the terminal device may perform the default rule for only some trigger events. Specifically, when the first HARQ state is different from the second HARQ state, the terminal device sends, to the network device on the first uplink grant based on the first HARQ state in the first HARQ process, data corresponding to a preconfigured or predefined trigger event. For example, data with a high priority corresponding to the trigger event may be sent on the first uplink grant in the first HARQ process. A priority of data may be determined based on a delay requirement of the data. For example, a stricter delay requirement of the data indicates a higher priority of the data. For example, the event that triggers the random access process is the RRC connection reestablishment, the RRC connection recovery, or the system message request. A priority of data corresponding to each of the three events is high, and the data may be sent on the first uplink grant in the first HARQ process. Specifically, when determining that radio bearers respectively corresponding to the trigger events belong to the first radio bearer type, the terminal device may send the data on the first logical channel on the first uplink grant in the first HARQ process. For example, when the first HARQ state is different from the second HARQ state, the terminal device sends, to the network device on the first uplink grant based on the first HARQ state in the first HARQ process, data corresponding to the RRC connection reestablishment. That a radio bearer corresponding to the RRC connection reestablishment is the SRB 1 is used as an example. The terminal device determines that the SRB 1 belongs to the first radio bearer type. The first radio bearer type corresponds to the first logical channel. Therefore, the terminal device determines that the data on the first logical channel may be sent on the first uplink grant in the first HARQ process. In other words, the terminal device may determine a radio bearer type corresponding to the trigger event, and send, on the first uplink grant based on the first HARQ state in the first HARQ process, data on a logical channel corresponding to the radio bearer type, to determine, based on the trigger event, whether to perform transmission of the data on the corresponding logical channel, and properly use a communication resource.

When the event that triggers the random access process is that no scheduling request resource is configured for the first logical channel, the terminal device sends the data on the first logical channel on the first uplink grant in the first HARQ process by default.

In the foregoing manner, data can be sent in a timely manner. This improves communication efficiency. Different events have different requirements for data transmission. For example, some events have higher delay requirements for the data transmission, and other events have higher reliability requirements for the data transmission. For step 204, this application proposes another implementation. In this implementation, when the first HARQ state is different from the second HARQ state, the terminal device may determine, based on the event that triggers the random access process, whether to send the data on the first logical channel on the first uplink grant in the first HARQ process.

For example, when the event that triggers the random access process is that the uplink synchronization state is out-of-synchronization, the scheduling request failure, the time synchronization establishment in the secondary timing advance cell group, the beam failure recovery, or the continuous uplink "listen before talk" mechanism failure, the terminal device may determine not to send the data on the first logical channel on the first uplink grant in the first HARQ process. Only when the first HARQ state is the same as the second HARQ state, can the data on the first logical channel be sent on the first uplink grant in the first HARQ process in these events.

When the event that triggers the random access process is the RRC connection reestablishment, the RRC connection recovery, or the system message request, the terminal device determines to send the data on the first logical channel on the first uplink grant in the first HARQ process. Optionally, the terminal device further needs to determine that the radio bearers corresponding to these events that trigger the random access process belong to the first radio bearer type. For how to implement the method for controlling different trigger events based on the radio bearer type, refer to related descriptions in step 204. Details are not described again.

When the event that triggers the random access process is that no scheduling request resource is configured for the first logical channel, the terminal device sends the data on the first logical channel on the first uplink grant in the first HARQ process by default.

It should be understood that this implementation may be used as an alternative solution of step 204. For an indication manner of the radio bearer type, refer to related descriptions in step 204. Details are not described again.

In the foregoing method, when the HARQ state configured for the logical channel does not match the HARQ state configured for the HARQ process 0, communication interruption can be avoided, and communication reliability can be improved.

The foregoing method provides a communication rule used when the HARQ state configured for the logical channel does not match the HARQ state configured for the HARQ process 0. An embodiment of this application proposes another communication method. In the method, a HARQ state configured for a HARQ process or a logical channel is flexibly adjusted, so that the HARQ state configured for the HARQ process matches the HARQ state configured for the logical channel, to avoid communication interruption. The following describes the method in detail.

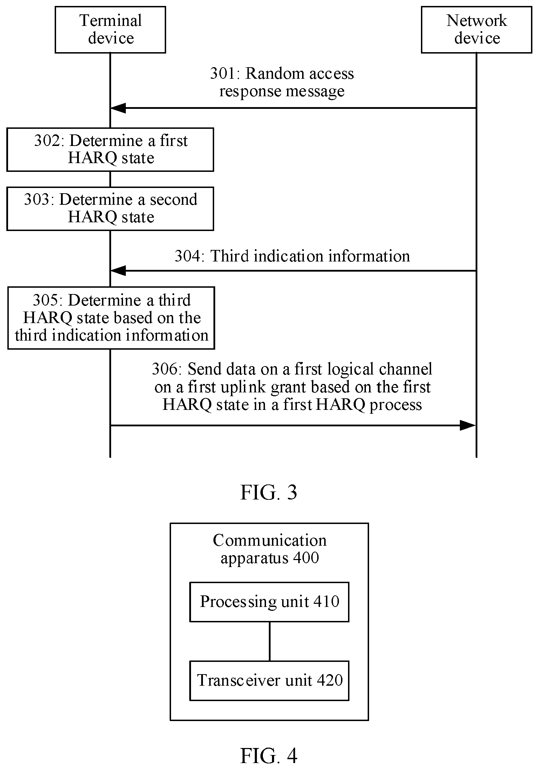

As shown in FIG. 3, the method may include the following steps.

Step 301: A network device sends a random access response message to a terminal device. Correspondingly, the terminal device receives the random access response message.

Step 302: The terminal device determines a first HARQ state.

Step 303: The terminal device determines a second HARQ state.

For step 301 to step 303, refer to related descriptions in step 201 to step 203. Details are not described herein again.

Step 304: The network device sends third indication information to the terminal device. Correspondingly, the terminal device receives the third indication information.

The third indication information may be used to change the first HARQ state or the second HARQ state. It should be understood that changing the first HARQ state or changing the second HARQ state may be changing a HARQ state corresponding to this time of data sending. For example, the third indication information is used to change a HARQ state of a first HARQ process. Data on a first logical channel is sent based on a third HARQ state in the first HARQ process. After the data sending ends, the HARQ state of the first HARQ process may be recovered to the first HARQ state. Alternatively, the third indication information may be used to change a HARQ state configured for a HARQ process. For example, the first HARQ state of a first HARQ process is changed to a third HARQ state, and the first HARQ state is not recovered after data sending on a first logical channel ends. For a change of a HARQ state of the first logical channel, refer to a change of the HARQ state of the first process. Details are not described again.

The third indication information may be used to change the first HARQ state or the second HARQ state. Specifically, the third indication information may indicate to send the data on the first logical channel based on the third HARQ state in the first HARQ process. In this case, the third indication information may indicate the third HARQ state. Alternatively, the third indication information indicates to send the data on the first logical channel based on the HARQ state of the first HARQ process. Alternatively, the third indication information indicates to modify, to the HARQ state of the first HARQ process, a HARQ state allowed to be used when the data on the first logical channel is sent. The third indication information may include at least one of an identifier of a logical channel, an identifier of the HARQ process, HARQ state change indication information, or the third HARQ state.

For example, when the third indication information indicates that the HARQ state of the first HARQ process is changed, the third indication information may include an index of the first HARQ process, the HARQ state change indication information, and the third HARQ state, the third indication information may include an index of the first HARQ process and the third HARQ state, the third indication information may include an index of the first HARQ process, or the third indication information may include the third HARQ state. In this case, the third HARQ state is the same as the second HARQ state.

For example, when the third indication information indicates that the HARQ state of the first logical channel is changed, the third indication information may include an identifier of the first logical channel, the HARQ state change indication information, and the third HARQ state, the third indication information may include an identifier of the first logical channel and the third HARQ state, the third indication information may include an identifier of the first logical channel, or the third indication information may include the third HARQ state. In this case, the third HARQ state is the same as the first HARQ state.

Step 305: The terminal device determines the third HARQ state based on the third indication information.

For example, when the third indication information includes the index of the first HARQ process, the HARQ state change indication information, and the third HARQ state, the terminal device determines the first HARQ process based on the index of the first HARQ process, determines, based on the HARQ state change indication information, that the HARQ state of the first HARQ process needs to be changed, and changes, to the third HARQ state, a HARQ state (namely, the first HARQ state) that has been configured for the first HARQ process.

When the third indication information includes the index of the first HARQ process and the third HARQ state, the terminal device determines the first HARQ process based on the index of the first HARQ process, and changes, to the third HARQ state, a HARQ state (namely, the first HARQ state) that has been configured for the first HARQ process. In other words, the network device and the terminal device may agree in advance. When the terminal device receives an index of a HARQ process and the third HARQ state, the terminal device may determine that a HARQ state of the HARQ process needs to be changed.

When there are two HARQ states, the third indication information may include the index of the first HARQ process. When receiving the index, the terminal device determines that the HARQ state of the HARQ process needs to be changed, and modifies the HARQ state of the HARQ process to another HARQ state. For example, when there are two HARQ states: a HARQ function enabled state and a HARQ function disabled state, the identifier of the HARQ process included in the third indication information is a HARQ process 0, a HARQ state that has been configured for the HARQ process 0 is the HARQ function enabled state, and the terminal device changes the HARQ state of the HARQ process 0 to the HARQ function disabled state.

When second indication information sent by the network device to the terminal device includes an identifier of the first HARQ process, and the third indication information includes the third HARQ state, the terminal device may change the HARQ state of the first HARQ process to the third HARQ state. Alternatively, the network device and the terminal device may agree, in advance, a HARQ process. For example, the network device and the terminal device agree that the HARQ process is the HARQ process 0. After the terminal device receives the third HARQ state, the HARQ state of the HARQ process 0 is different from the third HARQ state, and the terminal device changes the HARQ state of the HARQ process 0 to the third HARQ state.

It may be understood that when the third indication information indicates that the HARQ state of the first logical channel is changed, for a method for changing a HARQ state of a logical channel by the terminal device, refer to the foregoing method for changing the HARQ state of the HARQ process. Details are not described again.

The third indication information may be carried in the random access response message, a media access control control element, or downlink control information.

Corresponding to a plurality of possibilities of content of the third indication information, a manner in which the terminal device determines the third HARQ state is highly flexible, so that efficiency of determining the third HARQ state by the terminal device can be improved, and a communication delay can be further reduced. When the third indication information includes little content, for example, the third indication information includes a process identifier, overheads can be reduced.

Step 306: The terminal device sends the data on the first logical channel on a first uplink grant based on the third HARQ state in the first HARQ process. Correspondingly, the network device receives the data.

In the method, the terminal device dynamically adjusts a HARQ state of a HARQ process or a HARQ state of a logical channel based on indication information, so that the HARQ state of the HARQ process matches the HARQ state of the logical channel, and the network device and the terminal device normally communicate with each other. This improves communication reliability.

It may be understood that, to implement functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

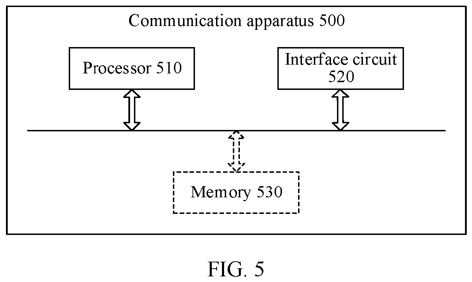

FIG. 4 and FIG. 5 are diagrams of structures of possible communication apparatuses according to embodiments of this application. The communication apparatuses may be configured to implement functions of the terminal device or the network device in the foregoing method embodiments. Therefore, beneficial effects of the foregoing method embodiments can also be implemented. In this embodiment of this application, the communication apparatus may be one of the terminal devices 120a to 120j shown in FIG. 1, may be the base station 110a or 110b shown in FIG. 1, or may be a module (for example, a chip) used in a terminal or a base station.

As shown in FIG. 4, a communication apparatus 400 includes a processing unit 410 and a transceiver unit 420. The communication apparatus 400 is configured to implement a function of the terminal or the base station in the method embodiment shown in FIG. 2 or FIG. 3.

When the communication apparatus 400 is configured to implement a function of the terminal device in the method embodiment shown in FIG. 2, the transceiver unit 420 is configured to receive a random access response message; the processing unit 410 is configured to determine a first HARQ state and a second HARQ state; and the transceiver unit 420 is further configured to send data on a first logical channel to a network device on a first uplink grant based on the first HARQ state in a first HARQ process.

When the communication apparatus 400 is configured to implement a function of the network device in the method embodiment shown in FIG. 2, the transceiver unit 420 is configured to: send the random access response message, and receive the data on the first logical channel.

When the communication apparatus 400 is configured to implement a function of the terminal device in the method embodiment shown in FIG. 3, the transceiver unit 420 is configured to receive a random access response message; the processing unit 410 is configured to determine a first HARQ state and a second HARQ state; the transceiver unit 420 is further configured to receive third indication information; the processing unit 410 is further configured to determine a third HARQ state based on the third indication information; and the transceiver unit 420 is further configured to send data on a first logical channel to a network device on a first uplink grant based on the first HARQ state in a first HARQ process.

When the communication apparatus 400 is configured to implement a function of the network device in the method embodiment shown in FIG. 3, the transceiver unit 420 is configured to: send the random access response message, send the third indication information, and receive the data on the first logical channel.

For more detailed descriptions of the processing unit 410 and the transceiver unit 420, directly refer to related descriptions in the method embodiments shown in FIG. 2 and FIG. 3. Details are not described herein again.

As shown in FIG. 5, a communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to: store instructions to be executed by the processor 510, store input data needed for the processor 510 to run instructions, or store data generated after the processor 510 runs instructions.

When the communication apparatus 500 is configured to implement the method shown in FIG. 2 or FIG. 3, the processor 510 is configured to implement a function of the processing unit 410, and the interface circuit 520 is configured to implement a function of the transceiver unit 420.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/"generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method performed by a communication apparatus, the method comprising:
receiving (201) a random access response message, wherein the random access response message indicates a first uplink grant resource;
determining (202) a first hybrid automatic repeat request HARQ state, wherein the first HARQ state is a HARQ function enabled state or a HARQ function disabled state of a first HARQ process, and the first HARQ process is a HARQ process used to send data on the first uplink grant resource;
determining (203) a second HARQ state, wherein the second HARQ state is a HARQ function enabled state or a HARQ function disabled state configured to be used when data on a first logical channel is sent; and
when the first HARQ state is different from the second HARQ state, sending (204) the data on the first logical channel on the first uplink grant resource based on the first HARQ state in the first HARQ process.

2. The method according to claim 1, wherein the method further comprises:
determining that a radio bearer corresponding to the first logical channel is a first radio bearer, wherein data on a logical channel corresponding to the first radio bearer is sent in the first HARQ process.

3. The method according to claim 1, wherein the method further comprises:
determining that a radio bearer corresponding to the first logical channel belongs to a first radio bearer type, wherein the first radio bearer type is a signaling radio bearer and comprises at least one radio bearer, and data on a logical channel corresponding to any radio bearer in the first radio bearer type is sent in the first HARQ process.

4. The method according to any one of claims 1 to 3, wherein the determining a first HARQ state comprises:
receiving first indication information, wherein the first indication information indicates the first HARQ state; and
determining the first HARQ state based on the first indication information.

5. The method according to any one of claims 1 to 4, wherein the determining a second HARQ state comprises:
receiving second indication information, wherein the second indication information indicates the second HARQ state; and
determining the second HARQ state based on the second indication information.

6. A communication method performed by a communication apparatus, the method comprising:
sending (201) a random access response message, wherein the random access response message indicates a first uplink grant resource; and
when a first HARQ state is different from a second HARQ state, receiving (204) data on a first logical channel on the first uplink grant resource based on the first HARQ state, wherein the first HARQ state is a HARQ function enabled state or a HARQ function disabled state of a first HARQ process, the first HARQ process is a HARQ process used by a terminal device to send data on the first uplink grant resource, and the second HARQ state is a HARQ function enabled state or a HARQ function disabled state configured to be used when the terminal device sends the data on the first logical channel.

7. The method according to claim 6, wherein the method further comprises:
sending first indication information, wherein the first indication information indicates the first HARQ state.

8. The method according to claim 6 or 7, wherein the method further comprises:
sending second indication information, wherein the second indication information indicates the second HARQ state.

9. A communication apparatus (400, 500), comprising:
means for performing the method according to any one of claims 1 to 5.

10. A communication apparatus (400, 500), comprising:
means for performing the method according to any one of claims 6 to 8.

11. A computer-readable storage medium comprising instructions which, when executed by a computer, cause the computer to carry out the method of any one of claims 1 to 5, or any one of claims 6 to 8.

12. A communication system, comprising the communication apparatus according to claim 9 and the communication apparatus according to claim 10.

## Patentansprüche

1. Kommunikationsverfahren, das durch eine Kommunikationsvorrichtung durchgeführt wird, wobei das Verfahren Folgendes umfasst:
Empfangen (201) einer Direktzugriffsantwortnachricht, wobei die Direktzugriffsantwortnachricht eine erste Uplink-Erteilungsressource angibt;
Bestimmen (202) eines ersten Zustands hybrider automatischer Wiederholungsanforderungen, HARQ-Zustands, wobei der erste HARQ-Zustand ein Zustand mit aktivierter HARQ-Funktion oder ein Zustand mit deaktivierter HARQ-Funktion eines ersten HARQ-Prozesses ist und der erste HARQ-Prozess ein HARQ-Prozess ist, der dazu verwendet wird, Daten auf der ersten Uplink-Erteilungsressource zu senden;
Bestimmen (203) eines zweiten HARQ-Zustands, wobei der zweite HARQ-Zustand ein Zustand mit aktivierter HARQ-Funktion oder ein Zustand mit deaktivierter HARQ-Funktion ist, der dazu konfiguriert ist, verwendet zu werden, wenn Daten auf einem ersten logischen Kanal gesendet werden; und
wenn sich der erste HARQ-Zustand von dem zweiten HARQ-Zustand unterscheidet, Senden (204) der Daten auf dem ersten logischen Kanal auf der ersten Uplink-Erteilungsressource basierend auf dem ersten HARQ-Zustand in dem ersten HARQ-Prozess.

2. Verfahren nach Anspruch 1, wobei das Verfahren ferner Folgendes umfasst:
Bestimmen, dass ein Funkträger, der dem ersten logischen Kanal entspricht, ein erster Funkträger ist, wobei Daten auf einem logischen Kanal, der dem ersten Funkträger entspricht, in dem ersten HARQ-Prozess gesendet werden.

3. Verfahren nach Anspruch 1, wobei das Verfahren ferner Folgendes umfasst:
Bestimmen, dass ein Funkträger, der dem ersten logischen Kanal entspricht, zu einer ersten Funkträgerart gehört, wobei die erste Funkträgerart ein Signalfunkträger ist und mindestens einen Funkträger umfasst und Daten auf einem logischen Kanal, der einem beliebigen Funkträger in der ersten Funkträgerart entspricht, in dem ersten HARQ-Prozess gesendet werden.

4. Verfahren nach einem der Ansprüche 1 bis 3, wobei das Bestimmen eines ersten HARQ-Zustands Folgendes umfasst:
Empfangen erster Angabeinformationen, wobei die ersten Angabeinformationen den ersten HARQ-Zustand angeben; und
Bestimmen des ersten HARQ-Zustands basierend auf den ersten Angabeinformationen.

5. Verfahren nach einem der Ansprüche 1 bis 4, wobei das Bestimmen eines zweiten HARQ-Zustands Folgendes umfasst:
Empfangen zweiter Angabeinformationen, wobei die zweiten Angabeinformationen den zweiten HARQ-Zustand angeben; und
Bestimmen des zweiten HARQ-Zustands basierend auf den zweiten Angabeinformationen.

6. Kommunikationsverfahren, das durch eine Kommunikationsvorrichtung durchgeführt wird, wobei das Verfahren Folgendes umfasst:
Senden (201) einer Direktzugriffsantwortnachricht, wobei die Direktzugriffsantwortnachricht eine erste Uplink-Erteilungsressource angibt; und
wenn sich ein erster HARQ-Zustand von einem zweiten HARQ-Zustand unterscheidet, Empfangen (204) von Daten auf einem ersten logischen Kanal auf der ersten Uplink-Erteilungsressource basierend auf dem ersten HARQ-Zustand,
wobei der erste HARQ-Zustand ein Zustand mit aktivierter HARQ-Funktion oder ein Zustand mit deaktivierter HARQ-Funktion eines ersten HARQ-Prozesses ist, der erste HARQ-Prozess ein HARQ-Prozess ist, der durch eine Endgeräteeinrichtung dazu verwendet wird, Daten auf der ersten Uplink-Erteilungsressource zu senden, und der zweite HARQ-Zustand ein Zustand mit aktivierter HARQ-Funktion oder ein Zustand mit deaktivierter HARQ-Funktion ist, der dazu konfiguriert ist, verwendet zu werden, wenn die Endgeräteeinrichtung die Daten auf dem ersten logischen Kanal sendet.

7. Verfahren nach Anspruch 6, wobei das Verfahren ferner Folgendes umfasst:
Senden erster Angabeinformationen, wobei die ersten Angabeinformationen den ersten HARQ-Zustand angeben.

8. Verfahren nach Anspruch 6 oder 7, wobei das Verfahren ferner Folgendes umfasst:
Senden zweiter Angabeinformationen, wobei die zweiten Angabeinformationen den zweiten HARQ-Zustand angeben.

9. Kommunikationsvorrichtung (400, 500), umfassend:
Mittel zum Durchführen des Verfahrens nach einem der Ansprüche 1 bis 5.

10. Kommunikationsvorrichtung (400, 500), umfassend:
Mittel zum Durchführen des Verfahrens nach einem der Ansprüche 6 bis 8.

11. Computerlesbares Speichermedium, umfassend Anweisungen, die, wenn sie durch einen Computer ausgeführt werden, den Computer dazu veranlassen, das Verfahren nach einem der Ansprüche 1 bis 5 oder einem der Ansprüche 6 bis 8 durchzuführen.

12. Kommunikationssystem, umfassend die Kommunikationsvorrichtung nach Anspruch 9 und die Kommunikationsvorrichtung nach Anspruch 10.

## Revendications

1. Procédé de communication réalisé par un appareil de communication, le procédé comprenant :
la réception (201) d'un message de réponse d'accès aléatoire, dans lequel le message de réponse d'accès aléatoire indique une première ressource d'octroi de liaison montante ;
la détermination (202) d'un premier état de demande de répétition automatique hybride HARQ, dans lequel le premier état HARQ est un état de fonction HARQ activée ou un état de fonction HARQ désactivée d'un premier processus HARQ, et le premier processus HARQ est un processus HARQ utilisé pour envoyer des données sur la première ressource d'octroi de liaison montante ;
la détermination (203) d'un second état HARQ, dans lequel le second état HARQ est un état de fonction HARQ activée ou un état de fonction HARQ désactivée configuré pour être utilisé lorsque des données sur un premier canal logique sont envoyées ; et
lorsque le premier état HARQ est différent du second état HARQ, l'envoi (204) des données sur le premier canal logique sur la première ressource d'octroi de liaison montante sur la base du premier état HARQ dans le premier processus HARQ.

2. Procédé selon la revendication 1, dans lequel le procédé comprend également :
le fait de déterminer qu'un support radio correspondant au premier canal logique est un premier support radio, dans lequel des données sur un canal logique correspondant au premier support radio sont envoyées dans le premier processus HARQ.

3. Procédé selon la revendication 1, dans lequel le procédé comprend également :
le fait de déterminer qu'un support radio correspondant au premier canal logique appartient à un premier type de support radio, dans lequel le premier type de support radio est un support radio de signalisation et comprend au moins un support radio, et des données sur un canal logique correspondant à tout support radio dans le premier type de support radio sont envoyées dans le premier processus HARQ.

4. Procédé selon l'une quelconque des revendications 1 à 3, dans lequel la détermination d'un premier état HARQ comprend :
la réception de premières informations d'indication, dans lequel les premières informations d'indication indiquent le premier état HARQ ; et
la détermination du premier état HARQ sur la base des premières informations d'indication.

5. Procédé selon l'une quelconque des revendications 1 à 4, dans lequel la détermination d'un second état HARQ comprend :
la réception de secondes informations d'indication, dans lequel les secondes informations d'indication indiquent le second état HARQ ; et
la détermination du second état HARQ sur la base des secondes informations d'indication.

6. Procédé de communication réalisé par un appareil de communication, le procédé comprenant :
l'envoi (201) d'un message de réponse d'accès aléatoire, dans lequel le message de réponse d'accès aléatoire indique une première ressource d'octroi de liaison montante ; et
lorsqu'un premier état HARQ est différent d'un second état HARQ, la réception (204) des données sur un premier canal logique sur la première ressource d'octroi de liaison montante sur la base du premier état HARQ,
dans lequel le premier état HARQ est un état de fonction HARQ activée ou un état de fonction HARQ désactivée d'un premier processus HARQ, le premier processus HARQ est un processus HARQ utilisé par un dispositif terminal pour envoyer des données sur la première ressource d'octroi de liaison montante, et le second état HARQ est un état de fonction HARQ activée ou un état de fonction HARQ désactivée configuré pour être utilisé lorsque le dispositif terminal envoie les données sur le premier canal logique.

7. Procédé selon la revendication 6, dans lequel le procédé comprend également :
l'envoi de premières informations d'indication, dans lequel les premières informations d'indication indiquent le premier état HARQ.

8. Procédé selon la revendication 6 ou 7, dans lequel le procédé comprend également :
l'envoi de secondes informations d'indication, dans lequel les secondes informations d'indication indiquent le second état HARQ.

9. Appareil de communication (400, 500), comprenant :
des moyens pour réaliser le procédé selon l'une quelconque des revendications 1 à 5.

10. Appareil de communication (400, 500), comprenant :
des moyens pour réaliser le procédé selon l'une quelconque des revendications 6 à 8.

11. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 5, ou l'une quelconque des revendications 6 à 8.

12. Système de communication, comprenant l'appareil de communication selon la revendication 9 et l'appareil de communication selon la revendication 10.
